# EUROPÄISCHE PATENTSCHRIFT

(11) **EP 4 299 961 B1**
(45) Veröffentlichungstag und Bekanntmachung des Hinweises auf die Patenterteilung: **19.08.2026**
(21) Anmeldenummer: 22182673.8
(22) Anmeldetag: 01.07.2022
(51) Int. Cl.: F16L 23/032, F16L 23/18, F16L 23/20, F16L 23/22, F16J 15/06, F16J 15/10

(54) **VORRICHTUNG ZU EINER AUFNAHME UND/ODER LEITUNG VON SCHÜTTGÜTERN UND/ODER PULVERN, MIT EINER FLANSCHVERBINDUNGSVORRICHTUNG**
DEVICE FOR RECEIVING AND / OR GUIDING BULK MATERIAL AND / OR POWDERS, WITH A FLANGE CONNECTION DEVICE
DISPOSITIF DE RÉCEPTION ET/OU DE CONDUITE DES MATIÈRES EN VRAC ET/OU DES POUDRES, DOTÉ D'UN DISPOSITIF DE LIAISON À BRIDE

(43) Veröffentlichungstag der Anmeldung: 03.01.2024
(73) Patentinhaber: Gericke AG, 8105 Regensdorf (CH)
(72) Erfinder: GERICKE, Markus H., 8707 Zollikon (CH); LAUER, Frank, 69231 Rauenberg (DE); SCHAFFNER, Reto, 8104 Weiningen (CH)
(74) Vertreter: Daub, Thomas

(56) Entgegenhaltungen:
- EP-A1- 2 792 916
- FR-A1- 2 835 587
- US-A- 3 620 556
- US-A- 5 904 382
- US-A1- 2014 252 765

## Beschreibung

### Stand der Technik

Die Erfindung betrifft eine Vorrichtung zu einer Aufnahme und/oder Leitung von Schüttgütern und/oder Pulvern mit einer Flanschverbindungsvorrichtung nach dem Oberbegriff des Anspruchs 1.

Es ist bereits eine Flanschverbindungsvorrichtung mit einem Flansch, der einen Grundkörper mit einer Hauptanlagefläche aufweist, mit einem weiteren Flansch, der einen weiteren Grundkörper mit einer weiteren Hauptanlagefläche aufweist, wobei der Flansch in einem montierten Zustand mit dem weiteren Flansch verbunden ist, und mit einem Dichtungselement, das in dem montierten Zustand zwischen dem Flansch und dem weiteren Flansch angeordnet ist, vorgeschlagen worden.

Aus US5904382 A ist eine sanitäre/aseptische Anschlussvorrichtung bekannt. Weitere Anschlussvorrichtungen sind aus FR2835587 A1, EP2792916 A1, US3620556 A und US2014/252765 A1 bekannt.

Die Aufgabe der Erfindung besteht insbesondere darin, eine gattungsgemäße Vorrichtung mit verbesserten Eigenschaften hinsichtlich einer Flanschpräzision bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Vorrichtung zu einer Aufnahme und/oder Leitung von Schüttgütern und/oder Pulvern mit einer Flanschverbindungsvorrichtung mit einem Flansch, der einen Grundkörper mit einer Hauptanlagefläche aufweist, mit einem weiteren Flansch, der einen weiteren Grundkörper mit einer weiteren Hauptanlagefläche aufweist, wobei der Flansch in einem montierten Zustand, insbesondere kraftschlüssig und/oder formschlüssig, mit dem weiteren Flansch verbunden ist, und mit einem Dichtungselement, das in dem montierten Zustand zwischen dem Flansch und dem weiteren Flansch angeordnet ist.

Es wird vorgeschlagen, dass der Flansch angrenzend an die Hauptanlagefläche eine Ausnehmung aufweist, in der das Dichtungselement in dem montierten Zustand zumindest teilweise, vorzugsweise vollständig, angeordnet ist, und dass der weitere Flansch einen an der weiteren Hauptanlagefläche aus dem weiteren Grundkörper herausragenden Fortsatz aufweist, der in dem montierten Zustand zumindest teilweise und/oder zumindest (umfangs-)abschnittsweise in die Ausnehmung eingreift und in dem montierten Zustand das Dichtungselement kontaktiert, wobei der Fortsatz zu einer Positionierung und Zentrierung des Dichtungselements und/oder zu einer definierten, vorzugsweise totraumfreien, Verpressung des Dichtungselements vorgesehen ist, wobei der Flansch und der weitere Flansch gemeinsam eine Nut begrenzen, die einen Teil der Ausnehmung ausbildet und die dazu vorgesehen ist, das Dichtungselement teilweise aufzunehmen und wobei sich eine Nutbreite der Nut ausgehend von einer Öffnung der Nut hin zu einem Tiefpunkt der Nut zumindest bereichsweise vergrößert. Dadurch kann vorteilhaft eine besonders hohe Flanschpräzision erreicht werden. Vorteilhaft kann ein besonders exakter Sitz zweier miteinander verbundener Flansche relativ zueinander erreicht werden. Vorteilhaft kann ein besonders präziser Sitz einer Flanschdichtung auf besonders einfache Weise erreicht werden Vorteilhaft kann eine einfache und zugleich sichere dichte Montage der Flasche aneinander ermöglicht werden. Insbesondere soll unter einem "Flansch" ein Verbindungselement zu einer Verbindung einer Öffnung und/oder einer Leitung mit einer weiteren Öffnung und/oder Leitung verstanden werden. Insbesondere kann ein Flansch rund, oval oder eine andere in sich geschlossene, z.B. polygonale, Form aufweisen. Insbesondere dichtet die Flanschverbindungsvorrichtung eine durch die Flansche gebildete Innenfläche / einen Innenraum ab. Insbesondere ist die Flanschverbindungsvorrichtung zur Leitung von Schüttgütern und/oder Pulvern vorgesehen. Beispielsweise kann der Flansch eine zylindrische Innenfläche und der weitere Flansch eine weitere zylindrische Innenfläche aufweisen, wobei die zylindrische Innenfläche und die weitere zylindrische Innenfläche parallel zueinander ausgerichtet sein können. Insbesondere dichtet die Flanschverbindungsvorrichtung den Innenraum auch dann zuverlässig ab, wenn ein Überdruck oder ein Unterdruck in dem Innenraum herrscht. Insbesondere kann der Flansch als ein separates Bauteil oder als ein mit einem die Öffnung und/oder die Leitung aufweisenden Bauteil einstückig oder einteilig ausgebildet sein. Unter "einstückig" soll insbesondere zumindest stoff-schlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Insbesondere ist die Flanschverbindungsvorrichtung zu einer lösbaren, vorzugsweise zerstörungsfrei lösbaren und/oder wiederholt verschließbaren, Verbindung von Leitungen und/oder Öffnungen vorgesehen. Die Vorrichtung zu einer Aufnahme und/oder Leitung von Schüttgütern und/oder Pulvern umfasst wenigstens die zur Leitung von Schüttgütern und/oder Pulvern vorgesehene Flanschverbindungsvorrichtung. Zusätzlich dazu kann die Vorrichtung weitere Behältnisse, Leitungen oder dergleichen, beispielsweise einer Fütterungsanlage, umfassen.

Insbesondere sind die zwei Flansche dazu vorgesehen, fest miteinander verbunden zu werden, beispielsweise durch ein Verklemmen, Verschrauben, Vernieten, Verpressen oder dergleichen. Insbesondere werden die Flansche dabei derart miteinander verbunden, dass Hauptanlageflächen der miteinander verbundenen Flansche, insbesondere in dem montierten Zustand, zumindest zu einem Großteil, vorzugsweise vollständig, in flächigem Berührungskontakt stehen. Unter "einem Großteil" soll in diesem Zusammenhang insbesondere 60%, bevorzugt 80% und besonders bevorzugt 95% verstanden werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Das Dichtungselement ist insbesondere dazu vorgesehen, eine Dichtigkeit der Verbindung der beiden Flansche, insbesondere gegenüber Schüttgütern und/oder Pulvern, herzustellen oder zumindest wesentlich zu erhöhen. Insbesondere ist das Dichtungselement aus einem Kunststoff, wie z.B. einem Elastomer, ausgebildet. Insbesondere ist das Dichtungselement aus einem Material ausgebildet, für welches nach den EHEDG (European Hygienic Engineering and Design Group)-Richtlinien eine Nassreinigung und eine Trockenreinigung erlaubt ist. Vorzugsweise ist das Dichtungselement aus einem Ethylen-Propylen-Dien-M-Gruppen (EPDM)-Kautschuk, wie EPDM-291, ausgebildet. Alternativ oder zusätzlich kann das Dichtungselement aus einem metallischen und/oder elektromagnetisch detektierbaren Material ausgebildet sein. Insbesondere sind der Flansch und/oder der weitere Flansch aus einem Metall ausgebildet. Alternativ ist jedoch auch eine Ausbildung der Flansche aus einem Kunststoff oder aus einem Verbundwerkstoff denkbar. Insbesondere ist das Dichtungselement elastisch verformbar ausgebildet. Insbesondere ist das Dichtungselement dazu vorgesehen, bei einer Montage der beiden Flansche aneinander zwischen den Flanschen verpresst zu werden. Insbesondere ist das Dichtungselement zumindest in Hauptdichtungsbereichen (der Innenfläche der Flansche zugewandte Bereiche) frei von Formtrenngraten ausgebildet. Insbesondere weist das Dichtungselement eine Form auf, welche im Zusammenspiel mit den Außenformen der Flansche eine Selbstzentrierung erzeugt. Insbesondere ist die durch die beiden Flansche und das Dichtungselement erzielbare Dichtung zumindest im Wesentlichen totraumfrei. Dadurch kann vorteilhaft eine Keim- oder Pilzvermehrung im Flanschbereich verhindert werden. Vorteilhaft kann eine Reinigbarkeit durch eine Trockenreinigung und/oder durch eine Nassreinigung über die totraumfreie Dichtung/Verbindung wesentlich vereinfacht und/oder verbessert werden. Ein Reinigungsprozess an einer konkav bis zylindrisch verformten Dichtfläche erfüllt vorteilhaft die an eine CIP (Cleaning in Place)- und/oder an eine SIP (Sterilization in Place)-Reinigung gestellten Ansprüche. Insbesondere ist das Dichtungselement rund, oval oder mit einer alternativen geschlossenen, z.B. polygonalen, Form versehen. Insbesondere bildet das Dichtungselement eine Form des Innenraums der Flanschverbindungsvorrichtung nach.

Die Ausnehmung ist als eine zwischen der Hauptanlagefläche des Flanschs und der Innenfläche des Flanschs liegende und in eine von dem weiteren Flansch wegweisende Richtung erstreckte Abstufung ausgebildet. Insbesondere ist die Ausnehmung in eine von dem weiteren Flansch wegweisende Richtung / in eine entgegen einer Normalenrichtung auf die Hauptanlagefläche des Flanschs weisende Richtung durch den Flansch begrenzt. Insbesondere ist die Ausnehmung in eine auf den weiteren Flansch hin weisende Richtung / in eine in die Normalenrichtung auf die Hauptanlagefläche des Flanschs weisende Richtung begrenzungsfrei. Insbesondere ist die Ausnehmung in eine von der Innenfläche des Flanschs wegweisende Richtung / in eine von einem durch den Flansch abzudichtenden Innenraum der Flanschverbindungsvorrichtung wegweisende Richtung durch den Flansch begrenzt. Insbesondere ist die Ausnehmung in eine auf die Innenfläche des Flanschs hin weisende Richtung / in eine auf einen durch den Flansch abzudichtenden Innenraum der Flanschverbindungsvorrichtung hin weisende Richtung begrenzungsfrei. Insbesondere ist die Ausnehmung an jedem Punkt / in jeder vertikalen Schnittansicht des Flanschs zu mindestens zwei Raumrichtungen von dem Flansch begrenzt. Insbesondere ist die Ausnehmung an jedem Punkt / in jeder vertikalen Schnittansicht des Flanschs zu höchstens zwei Raumrichtungen von dem Flansch begrenzt. Insbesondere erstreckt sich die Ausnehmung in Umfangsrichtung um den gesamten Flansch. Insbesondere sind der Flansch und der weitere Flansch komplementär zueinander ausgebildet / geformt. Insbesondere kontaktiert zumindest eine der Begrenzungsflächen der Ausnehmung in dem montierten Zustand das Dichtungselement. Vorzugsweise kontaktieren alle Begrenzungsflächen der Ausnehmung in dem montierten Zustand das Dichtungselement. Insbesondere übt zumindest eine der Begrenzungsflächen der Ausnehmung in dem montierten Zustand eine Verpresskraft auf das Dichtungselement aus. Vorzugsweise üben alle Begrenzungsflächen der Ausnehmung in dem montierten Zustand Verpresskräfte auf das Dichtungselement aus.

Insbesondere ist der Fortsatz als eine zwischen der Hauptanlagefläche des weiteren Flanschs und einer Innenfläche des weiteren Flanschs liegende und in eine auf den Flansch hin weisende Richtung erstreckte Abstufung ausgebildet. Insbesondere ragt der Fortsatz in eine zu dem Flansch hin weisende Richtung aus dem Grundkörper des weiteren Flanschs hervor. Insbesondere weist der Fortsatz in allen vertikalen Schnittansichten zwei zumindest im Wesentlichen vertikal erstreckte Seitenwände auf. Insbesondere sind die die zwei vertikal erstreckten Seitenwände abbildenden Begrenzungslinien in der vertikalen Schnittansicht angewinkelt zueinander / unparallel zueinander. Insbesondere erstreckt sich eine Vertikalrichtung des Flanschs und/oder des weiteren Flanschs parallel zu einer Axialrichtung von Innenöffnungen der Flansche / parallel zu einer Axialrichtung einer/eines durch die Flansche verbundenen Flanschöffnung / Flanschkanals. Insbesondere kontaktiert zumindest eine der Begrenzungsflächen des Fortsatzes in dem montierten Zustand das Dichtungselement. Vorzugsweise kontaktieren zumindest zwei Begrenzungsflächen des Fortsatzes in dem montierten Zustand das Dichtungselement. Bevorzugt ist zumindest eine Begrenzungsfläche des Fortsatzes, insbesondere eine dem Innenraum der Flanschverbindungsvorrichtung zugewandte Begrenzungsfläche des Fortsatzes kontaktfrei zu dem Dichtungselement. Insbesondere übt zumindest eine der Begrenzungsflächen des Fortsatzes in dem montierten Zustand eine Verpresskraft auf das Dichtungselement aus. Insbesondere üben zumindest zwei der Begrenzungsflächen des Fortsatzes in dem montierten Zustand Verpresskräfte auf das Dichtungselement aus. Insbesondere ist ein Teilbereich des Dichtungselements, welcher im montierten Zustand der Flanschverbindungsvorrichtung an einer Begrenzungsfläche des Fortsatzes anliegt, die dem Flansch zugewandt ist und/oder die in einer zu der Hauptanlagefläche des weiteren Flanschs parallelen Ebene liegt, insbesondere dessen Materialdicke und/oder dessen Materialeigenschaften, wie Elastizitätseigenschaften, zu einer Einstellung einer definierten Verpressung des Dichtungselements vorgesehen. Insbesondere ist die Begrenzungsfläche des Fortsatzes, welche entgegenliegend zu einer dem Innenraum / der Innenfläche der Flanschverbindungsvorrichtung / dem Flansch zugewandten Begrenzungsfläche des Fortsatzes liegt, zu der Zentrierung des Dichtungselements vorgesehen, insbesondere indem sie zu der Axialrichtung angewinkelt ausgebildet ist. Insbesondere verbreitert sich der Fortsatz in eine von dem weiteren Flansch wegweisende Richtung.

Insbesondere weist das Dichtungselement, insbesondere in einem verpressten und in einem unverpressten Zustand, vorzugsweise in dem montierten Zustand und in einem unmontierten Zustand, einen L-förmigen (vertikalen) Querschnitt auf. Insbesondere umfasst das L-förmige Dichtungselement zwei in der (vertikalen) Querschnittansicht zumindest im Wesentlichen rechtwinklig zueinander liegende Schenkel. Insbesondere umfasst das L-förmige Dichtungselement in der Querschnittansicht einen Schenkel, welcher dazu vorgesehen ist, zwischen zwei zueinander in Axialrichtung der Flansche / des Innenraums der Flanschverbindungsvorrichtung gegenüberliegenden Flächen der Flansche zu liegen / verpresst zu werden. Der Schenkel ist zu einer Einstellung der definierten Verpressung vorgesehen. Insbesondere umfasst das L-förmige Dichtungselement in der Querschnittansicht einen weiteren Schenkel, welcher dazu vorgesehen ist, zwischen zwei zueinander zumindest im Wesentlichen senkrecht zu der in Axialrichtung der Flansche / des Innenraums der Flanschverbindungsvorrichtung gegenüberliegenden Flächen der Flansche zu liegen / verpresst zu werden. Der weitere Schenkel ist zu einer Einstellung der Zentrierung vorgesehen. Insbesondere soll unter einem "L-förmigen Querschnitt" ein, vorzugsweise vertikaler, Querschnitt durch das Dichtungselement verstanden werden, welcher einem lateinischen Großbuchstaben "L" zumindest ähnelt.

Dadurch, dass der Flansch und der weitere Flansch gemeinsam eine Nut begrenzen, die einen Teil der Ausnehmung ausbildet und die dazu vorgesehen ist, das Dichtungselement teilweise aufzunehmen kann vorteilhaft eine einfache Zentrierung, insbesondere eine Selbstzentrierung der Flansche zueinander durch das Dichtungselement erreicht werden, insbesondere unter Ausschluss eines Totraums. Insbesondere ist die Nut in der vertikalen Querschnittsansicht in Radialrichtung der Flansche / in Richtungen senkrecht zu der Axialrichtung der Flansche durch die Flansche begrenzt. Insbesondere ist die Nut in der vertikalen Querschnittsansicht in Axialrichtung der Flansche einseitig geöffnet. Insbesondere schließt an eine Öffnung der Nut ein ebenfalls durch die Flansche begrenzter Kanal an, welcher die Nut mit dem Innenraum der Flanschverbindungsvorrichtung / dem durch die Flansche abzudichtenden Innenraum verbindet. Insbesondere ist die Nut nicht direkt zu dem Innenraum der Flanschverbindungsvorrichtung / dem durch die Flansche abzudichtenden Innenraum hin geöffnet. Alternativ ist denkbar, dass die gesamte Nut durch nur einen der beiden Flansche ausgebildet ist, wodurch ein Selbstzentrierungseffekt dadurch ggf. beeinträchtigt werden könnte. Insbesondere umfasst die Nut im ordnungsgemäß montierten und zentrierten Zustand mindestens ein Zehntel, vorzugsweise mindestens ein Siebtel und bevorzugt mindestens ein Fünftel der Ausnehmung. Insbesondere umfasst die Nut im ordnungsgemäß montierten und zentrierten Zustand höchstens eine Hälfte, vorzugsweise höchstens ein Drittel und bevorzugt mindestens ein Viertel der Ausnehmung. Insbesondere ist die Nut in dem montierten Zustand zumindest zu 10%, vorzugsweise zumindest zu 20% und bevorzugt zumindest zu 30% durch den, insbesondere die Ausnehmung ausbildenden, Flansch begrenzt. Insbesondere ist die Nut in dem montierten Zustand höchstens zu 50%, vorzugsweise höchstens zu 40% und bevorzugt höchstens zu 30% durch den, insbesondere die Ausnehmung ausbildenden, Flansch begrenzt. Insbesondere ist die Nut in dem montierten Zustand zumindest zu 50%, vorzugsweise zumindest zu 60% und bevorzugt zumindest zu 70% durch den, insbesondere den Fortsatz ausbildenden, weiteren Flansch begrenzt. Insbesondere ist die Nut in dem montierten Zustand höchstens zu 90%, vorzugsweise höchstens zu 80% und bevorzugt höchstens zu 70% durch den, insbesondere den Fortsatz ausbildenden, weiteren Flansch begrenzt. Insbesondere weist die Nut in der Querschnittansicht eine Form eines in einer oberen Hälfte abgeschnittenen Dreiecks auf.

Wenn sich eine Nutbreite der Nut ausgehend von einer Öffnung der Nut hin zu einem Tiefpunkt der Nut zumindest bereichsweise vergrößert, kann ein vorteilhafter Selbstzentrierungseffekt erreicht werden. Insbesondere ist die Nut am Tiefpunkt um wenigstens 10%, vorzugsweise um wenigstens 20% und bevorzugt um wenigstens 30% breiter als an der Öffnung der Nut. Insbesondere ist die Nut am Tiefpunkt höchstens um 100% und vorzugsweise höchstens um wenigstens 50% breiter als an der Öffnung der Nut. Insbesondere ist die Form der Nut dazu vorgesehen, gezielt eine konkave Verpressung des Dichtungselements zu erzeugen.

Dadurch, dass das Dichtungselement einen Schenkel umfasst, der dazu vorgesehen ist, formschlüssig in die Nut einzugreifen, wobei das Dichtungselement dazu vorgesehen ist, mittels des Schenkels selbsthaltend in der Nut angeordnet zu werden kann vorteilhaft eine Überkopf-Montage deutlich vereinfacht werden. Insbesondere weist der Schenkel des Dichtungselements eine, insbesondere sich ausgehend von einem Knickpunkt / Scheitelpunkt des Dichtungselements verbreiternde, Form auf, welche dazu vorgesehen ist, in die sich ausgehend von der Öffnung der Nut vergrößernde Nut einzugreifen. Insbesondere spannen der Schenkel und der weitere Schenkel zumindest auf einer Innenseite des L-förmigen Querschnitts in einem Winkel von weniger als 90°, beispielsweise von etwa 80°, auf. Insbesondere ist ein Innendurchmesser des Dichtungselements im Bereich einer Spitze des Schenkels kleiner als im Bereich eines Ansatzes des Schenkels. Unter "selbsthaltend" soll insbesondere verstanden werden, dass das Dichtungselement sich nicht alleine durch eine auf das Dichtungselement wirkende Schwerkraft von dem weiteren Flansch lösen kann. Insbesondere ist der Schenkel des Dichtungselements dazu vorgesehen, einen Formschluss mit dem weiteren Flansch, insbesondere mit dem Fortsatz des weiteren Flanschs, einzugehen.

Zudem wird vorgeschlagen, dass die Ausnehmung eine Flanke des Grundkörpers des Flanschs ausbildet, die sich von der Hauptanlagefläche des Flanschs bis in die Nut erstreckt, wobei eine maximale axiale Erstreckung der Flanke größer ist als eine maximale axiale Erstreckung des Dichtungselements, insbesondere in einem unkomprimierten Zustand. Dadurch kann vorteilhaft eine besonders hohe Flanschpräzision erreicht werden. Insbesondere wird das Dichtungselement, insbesondere der weitere Schenkel des Dichtungselements, beim Zusammenfügen der Flansche derart komprimiert, dass der Schenkel in die Nut eingepresst wird. Insbesondere füllt der eingepresste Schenkel nach dem Zusammenfügen der Flansche die Nut komplett aus.

Wenn der Flansch, das Dichtungselement und der weitere Flansch in dem montierten Zustand, insbesondere in einem Verbindungsbereich, einen gleichen minimalen Abstand zu einer gemeinsamen Mittelachse aufweisen, kann vorteilhaft eine besonders hohe Flanschpräzision erreicht werden.

Zusätzlich wird vorgeschlagen, dass die Flanschverbindungsvorrichtung einen Innenraum aufweist, der als eine Leitung für ein Schüttgut, vorgesehen ist, wobei der Flansch, das Dichtungselement und der weitere Flansch in dem montierten Zustand gegenüber dem Innenraum totraumfrei miteinander verbunden sind. Dadurch kann vorteilhaft eine besonders gute Hygiene erreicht werden. Vorteilhaft kann der Innenraum in diesem Fall für eine Leitung eines Lebensmittels oder einer Chemikalie mit hoher Reinheit verwendet werden.

Wenn außerdem eine Innenfläche des Dichtungselements in dem montierten Zustand bündig zu einer, insbesondere zylindrischen, Innenfläche des Flanschs und zu einer weiteren, insbesondere zylindrischen, Innenfläche des weiteren Flanschs angeordnet ist, kann vorteilhaft eine gute Hygiene, insbesondere durch eine Vermeidung von Toträumen, erreicht werden.

Weiterhin wird vorgeschlagen, dass sich die Hauptanlagefläche und die weitere Hauptanlagefläche in dem montierten Zustand kontaktieren. Dadurch kann vorteilhaft ein besonders fester und/oder sicherer Sitz der Flansche zueinander / aneinander erreicht werden.

Wenn zudem ein, insbesondere maximaler, Außendurchmesser des Flanschs in einem Bereich der Hauptanlagefläche zumindest im Wesentlichen gleich groß ist wie ein weiterer, insbesondere maximaler, Außendurchmesser des weiteren Flanschs in einem Bereich der weiteren Hauptanlagefläche kann eine einfache Überprüfung einer Zentrierung von außen gewährleistet werden. Dadurch kann eine hohe Hygiene auch während einem längeren Betrieb gewährleistet werden. Alternativ sind jedoch auch voneinander abweichende maximale Außendurchmesser denkbar. Beispielsweise könnte auch einer der beiden Flansche am Außendurchmesser abgebogen sein und den anderen Flansch dadurch überlappen.

Zudem wird vorgeschlagen, dass der Flansch einen Innendurchmesser aufweist, der mindestens DN 200, vorzugsweise mindestens DN 300, entspricht. Dadurch kann vorteilhaft ein hoher Durchfluss erreicht werden. Insbesondere kann vorteilhaft eine Flanschverbindungsvorrichtung mit einer hohen Durchflussmenge und zugleich einer hohen Hygiene erreicht werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise zu sinnvollen weiteren Kombinationen zusammenfassen.

Es zeigen:
- Fig. 1: eine schematische Explosionsdarstellung einer Vorrichtung zu einer Aufnahme und/oder Leitung von Schüttgut mit einer Flanschverbindungsvorrichtung,
- Fig. 2: eine schematische vertikale Schnittansicht durch die Flanschverbindungsvorrichtung in einem montierten Zustand,
- Fig. 3: eine Vergrößerung eines Teils der in der Fig. 2 gezeigten vertikalen Schnittansicht durch die Flanschverbindungsvorrichtung in einem Verbindungsbereich und
- Fig. 4: eine schematische vertikale Schnittansicht eines Dichtungselements der Flanschverbindungsvorrichtung.

### Beschreibung des Ausführungsbeispiels

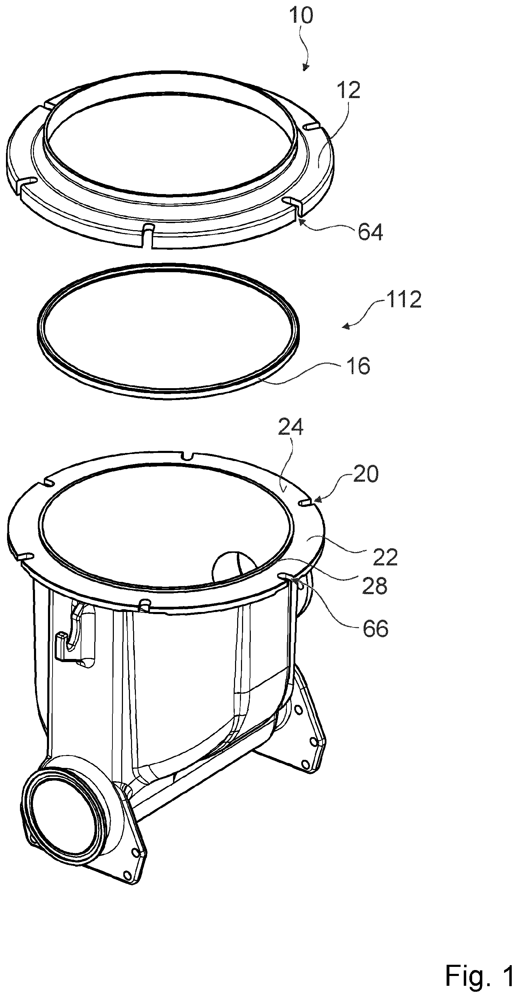

Die Figur 1 zeigt eine schematische Explosionsdarstellung einer Vorrichtung zu einer Aufnahme und/oder Leitung von Schüttgütern und/oder Pulvern. Die Vorrichtung weist eine Flanschverbindungsvorrichtung 112 auf. Die Vorrichtung ist beispielhaft als ein Dosierapparat für Nahrungsmittel, Chemie- oder Pharmaprodukte ausgebildet. Alternativ kann die Flanschverbindungsvorrichtung 112 selbstverständlich auch in andere Vorrichtungen zur Aufnahme und/oder Leitung von Schüttgütern und/oder Pulvern eingesetzt werden.

Die Flanschverbindungsvorrichtung 112 weist einen Flansch 10 auf. Die Flanschverbindungsvorrichtung 112 weist einen weiteren Flansch 20 auf. Der weitere Flansch 20 ist beispielhaft einstückig mit einer Mulde der Vorrichtung zur Aufnahme und/oder Leitung von Schüttgütern und/oder Pulvern verbunden. Der Flansch 10 und der weitere Flansch 20 sind dazu vorgesehen, aneinander montiert zu werden. Der Flansch 10 und der weitere Flansch 20 weisen dazu beispielhaft Montageausnehmungen 64, 66 auf, welche eine Verschraubung der Flansche 10, 20 miteinander ermöglichen. Alternativ ist auch eine Montage der Flansche 10, 20 mittels einer direkten Verschraubung von in die Flansche 10, 20 eingeschnittenen Gewinden denkbar. Die Flanschverbindungsvorrichtung 112 weist ein Dichtungselement 16 auf. Das Dichtungselement 16 bildet eine Dichtung aus. Das Dichtungselement 16 ist im montierten Zustand zwischen den Flanschen 10, 20 angeordnet. Das Dichtungselement 16 ist elastisch verformbar ausgebildet. Das Dichtungselement 16 ist im montierten Zustand elastisch verformt. Das Dichtungselement 16 ist im montierten Zustand zwischen den Flanschen 10, 20 verpresst. Das Dichtungselement 16 ist dazu vorgesehen, eine partikeldichte Verbindung der Flansche 10, 20 zu erzeugen. Die in der Fig. 1 dargestellten Flansche 10, 20 sind rund ausgebildet. Alternative Flanschformen sind jedoch denkbar. Das Dichtungselement 16 schließt einen Übergang von dem Flansch 10 zu dem weiteren Flansch 20 zylindrisch bis konkav. Dadurch kann die Verbindung der Flansche 10, 20 vorteilhaft für einen Reinigungsprozess trocken und/oder nass nach den EHEDG-Richtlinien für einen CIP-Vorgang und/oder nach den EHEDG-Richtlinien für einen SIP-Vorgang eingesetzt werden.

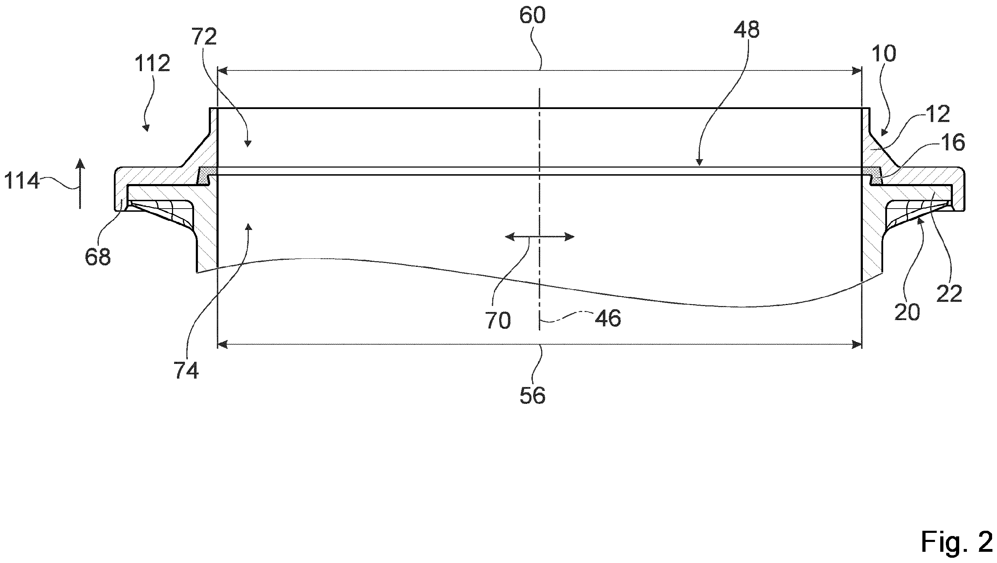

Die Fig. 2 zeigt eine schematische vertikale Schnittansicht durch die Flanschverbindungsvorrichtung 112 in einem montierten Zustand. Der Flansch 10 ist mit dem weiteren Flansch 20 verbunden. Der Flansch 10 weist einen Grundkörper 12 auf. Der Grundkörper 12 bildet eine Hauptanlagefläche 14 aus. Der weitere Flansch 20 weist einen weiteren Grundkörper 22 auf. Der weitere Grundkörper 22 bildet eine weitere Hauptanlagefläche 24 aus. Die Hauptanlageflächen 14, 24 der Flansche 10, 20 liegen im montierten Zustand berührend aneinander an. Die Hauptanlageflächen 14, 24 der Flansche 10, 20 sind jeweils eben ringscheibenförmig ausgebildet. Der Flansch 10 weist an einem radial äußeren, an die Hauptanlagefläche 14 anschließenden Ende eine Lasche 68 auf. Die Lasche 68 überlappt ein radial äußeres Ende des weiteren Flanschs 20 in Radialrichtung 70. Alternativ könnten die radial äußeren Enden der beiden Flansche 10, 20 bündig miteinander abschließen. Die Flanschverbindungsvorrichtung 112 bildet einen Innenraum 48 aus. Die Flanschverbindungsvorrichtung 112 dichtet den Innenraum 48 ab. Der Innenraum 48 ist als eine Leitung für ein Schüttgut oder ein Pulver vorgesehen. Der Flansch 10, das Dichtungselement 16 und der weitere Flansch 20 sind in dem montierten Zustand gegenüber dem Innenraum 48 totraumfrei miteinander verbunden. Der Flansch 10 bildet einen Teilinnenraum 72 des Innenraums 48 aus. Der weitere Flansch 20 bildet einen weiteren Teilinnenraum 74 des Innenraums 48 aus. Das Dichtungselement 16 dichtet eine Verbindung der Teilinnenräume 72, 74 zueinander ab. Der Flansch 10 weist einen Innendurchmesser 60 auf, der DN 200 entspricht. Der weitere Flansch 20 weist einen Innendurchmesser 56 auf, der DN 200 entspricht. Ein Innendurchmesser des Dichtungselements 16 im verpressten Zustand entspricht ebenfalls DN 200. Die Flansche 10, 20 weisen im montierten Zustand eine gemeinsame Mittelachse 46 auf. Der Flansch 10, das Dichtungselement 16 und der weitere Flansch 20 weisen in dem montierten Zustand in einem Verbindungsbereich der beiden Flansche 10, 20 einen gleichen minimalen Abstand zu der gemeinsamen Mittelachse 46 auf.

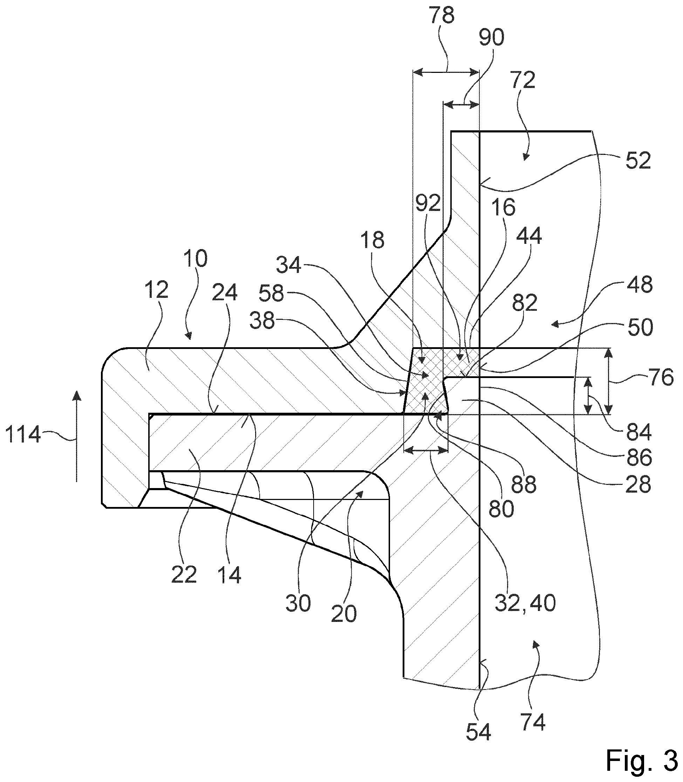

Die Fig. 3 zeigt schematisch eine Vergrößerung eines Teils der in der Fig. 2 gezeigten vertikalen Schnittansicht durch die Flanschverbindungsvorrichtung 112 in dem Verbindungsbereich. Der Flansch 10 weist eine Ausnehmung 18 auf. Das Dichtungselement 16 ist in dem montierten Zustand in der Ausnehmung 18 angeordnet. Die Ausnehmung 18 des Flanschs 10 grenzt an die Hauptanlagefläche 14 an. Die Ausnehmung 18 verläuft innen ringförmig um die Hauptanlagefläche 14. Die Ausnehmung 18 ist auf einer dem Teilinnenraum 72 zugewandten Seite der Hauptanlagefläche 14 angeordnet. Die Ausnehmung 18 weist einen Boden 44 auf. Der Boden 44 ist flach. Eine Oberfläche des Bodens 44 verläuft parallel zu der Hauptanlagefläche 14 des Flanschs 10. Die Ausnehmung 18 bildet eine Flanke 38 des Grundkörpers 12 des Flanschs 10 aus. Die Ausnehmung 18 weist eine Seitenwand 58 auf. Die Seitenwand 58 begrenzt die Ausnehmung 18 in eine von dem Teilinnenraum 72 wegweisende Richtung. Die Seitenwand 58 ist zu einer Innenfläche 52 des Flanschs 10 angewinkelt. Die Seitenwand 58 ist zu einer Vertikalen 114 angewinkelt. Die Anwinklung der Seitenwand 58 dient zu einer Unterstützung der Selbstzentrierung über das Dichtungselement 16 / des Dichtungselements 16. Die Seitenwand 58 und der Boden 44 spannen einen Winkel von mehr als 90°, z.B. von etwa 92° oder von etwa 95°, auf. Die Ausnehmung 18 weist eine Tiefe 76 von etwa 7 mm auf. Die Ausnehmung 18 weist eine (ringförmige) Breite 78 von etwa 7 mm auf.

Der weitere Flansch 20 weist einen Fortsatz 28 auf. Der Fortsatz 28 des weiteren Flanschs 20 ragt aus dem weiteren Grundkörper 22 heraus. Der Fortsatz 28 des weiteren Flanschs 20 ragt an der weiteren Hauptanlagefläche 24 aus dem weiteren Grundkörper 22 heraus. Der Fortsatz 28 ist als ringförmige Erhebung ausgebildet. Der Fortsatz 28 grenzt an die weitere Hauptanlagefläche 24 an. Der Fortsatz 28 greift in dem montierten Zustand in die Ausnehmung 18 ein. Der Fortsatz 28 ist zu einer Positionierung des Dichtungselements 16 vorgesehen. Der Fortsatz 28 ist zu einer Zentrierung des Dichtungselements 16 vorgesehen. Der Fortsatz 28 ist zu einer definierten Verpressung des Dichtungselements 16 vorgesehen. Der Fortsatz 28 weist eine erste Seitenwand 80 auf. Die erste Seitenwand 80 des Fortsatzes 28 ist von dem Teilinnenraum 74 des weiteren Flanschs 20 abgewandt angeordnet. Die erste Seitenwand 80 des Fortsatzes 28 schließt an die weitere Hauptanlagefläche 24 an. Die erste Seitenwand 80 des Fortsatzes 28 ist relativ zu einer weiteren Innenfläche 54 des weiteren Flanschs 20 angewinkelt. Die erste Seitenwand 80 des Fortsatzes 28 ist relativ zu der Vertikalen 114 angewinkelt. Ein zwischen der ersten Seitenwand 80 des Fortsatzes 28 und der weiteren Hauptanlagefläche 24 aufgespannter Winkel beträgt etwa 80°. Ein zwischen der ersten Seitenwand 80 des Fortsatzes 28 und der Vertikalen 114 / einer Verlängerung der weiteren Innenfläche 54 des weiteren Flanschs 20 aufgespannter Winkel beträgt etwa 10°. Durch die Anwinklung der ersten Seitenwand 80 des Fortsatzes 28 des weiteren Flanschs 20 wird ein konkaver Aufnahmeraum 88 für das Dichtungselement 16 bereitgestellt. Der Fortsatz 28 weist eine Oberfläche 82 auf, welche im montierten Zustand dem Flansch 10 zugewandt ist. Die Oberfläche 82 des Fortsatzes 28 ist eben und/oder flach ausgebildet. Der Fortsatz 28 weist eine zweite Seitenwand 86 auf. Die zweite Seitenwand 86 des Fortsatzes 28 ist zu dem Teilinnenraum 74 des weiteren Flanschs 20 zugewandt angeordnet. Die zweite Seitenwand 86 des Fortsatzes 28 ist von der weiteren Hauptanlagefläche 24 abgewandt. Die zweite Seitenwand 86 des Fortsatzes 28 bildet eine Fortsetzung der weiteren Innenfläche 54 des weiteren Flanschs 20 aus. Die zweite Seitenwand 86 des Fortsatzes 28 verläuft parallel zu der Vertikalen 114. Die zweite Seitenwand 86 des Fortsatzes 28 verläuft parallel zu der weiteren Innenfläche 54 des weiteren Flanschs 20. Der Fortsatz 28 weist eine Höhe 84 auf. Die Höhe 84 des Fortsatzes 28 des weiteren Flanschs 20 ist kleiner als die Tiefe 76 der Ausnehmung 18 des Flanschs 10. Die Höhe 84 des Fortsatzes 28 beträgt etwa 4 mm. Die Höhe 84 ist derart eingestellt und/oder mit Maßen des Dichtungselements 16 abgestimmt, dass die definierte Verpressung des Dichtungselements 16 erreicht werden kann. Der Fortsatz 28 weist eine (ringförmige) Breite 90 auf. Die Breite 90 des Fortsatzes 28 des weiteren Flanschs 20 ist kleiner als die Breite 78 der Ausnehmung 18 des Flanschs 10. Die Breite 90 an einem oberen Ende des Fortsatzes 28 des weiteren Flanschs 20 beträgt etwa 3,9 mm. Selbstverständlich könnte die Anordnung der Ausnehmung 18 und des Fortsatzes 28 zwischen den Flanschen 10, 20 auch umgekehrt sein.

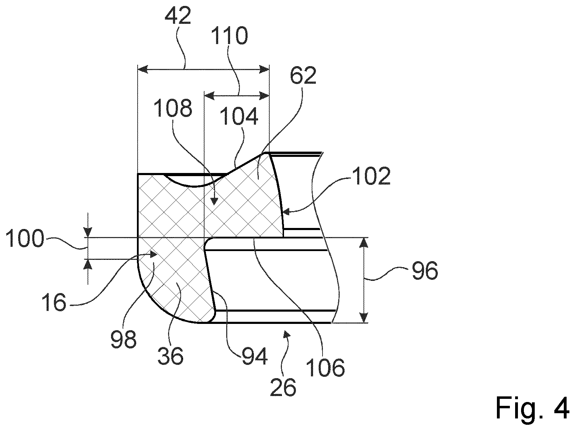

Der Flansch 10 und der weitere Flansch 20 begrenzen gemeinsam eine Nut 30. Die Nut 30 bildet dabei einen Teil der Ausnehmung 18 aus. Die Nut 30 ist dazu vorgesehen, das Dichtungselement 16 teilweise aufzunehmen. Die Nut 30 weist eine Nutbreite 32 auf. Die Nutbreite 32 variiert. Die Nutbreite 32 der Nut 30 vergrößert sich ausgehend von einer Öffnung 34 der Nut 30 hin zu einem Tiefpunkt der Nut 30. Die Flanke 38 erstreckt sich von der Hauptanlagefläche 14 des Flanschs 10 bis in die Nut 30. Eine maximale axiale Erstreckung 40 der Flanke 38 ist dabei größer ist als eine maximale axiale Erstreckung 42 des unverpressten Dichtungselements 16 (vgl. Fig. 4), insbesondere in dieselbe Raumrichtung. Der Flansch 10 und der weitere Flansch 20 begrenzen gemeinsam einen Kanal 92. Der Kanal 92 bildet dabei einen Teil der Ausnehmung 18 aus. Der Kanal 92 schließt an die Öffnung 34 der Nut 30 an. Der Kanal 92 verbindet die Nut 30 mit dem Innenraum 48 der Flanschverbindungsvorrichtung 112. Der Kanal 92 ist dazu vorgesehen, das Dichtungselement 16 teilweise aufzunehmen. Das Dichtungselement 16 bildet im montierten Zustand eine dem Innenraum 48 zugewandte Innenfläche 50 aus. Die Innenfläche 50 des Dichtungselements 16 ist in dem montierten Zustand bündig zu der Innenfläche 52 des Flanschs 10 angeordnet. Die Innenfläche 50 des Dichtungselements 16 ist in dem montierten Zustand bündig zu der weiteren Innenfläche 54 des weiteren Flanschs 20 angeordnet.

Die Fig. 4 zeigt eine schematische vertikale Schnittansicht des Dichtungselements 16. Das Dichtungselement 16 weist einen L-förmigen Querschnitt 26 auf. Der L-förmige Querschnitt 26 des Dichtungselements 16 umfasst einen Schenkel 36. Der Schenkel 36 ist dazu vorgesehen, formschlüssig in die Nut 30 einzugreifen. Das Dichtungselement 16 ist dazu vorgesehen, mittels des Schenkels 36 selbsthaltend in der Nut 30 angeordnet zu werden. Ein minimaler Innendurchmesser (nicht dargestellt) des losen Dichtungselements 16 ist kleiner als ein maximaler Außendurchmesser (nicht dargestellt) des Fortsatzes 28 des weiteren Flanschs 20. Der Schenkel 36 des Dichtungselements 16 ist auf einer im montierten Zustand dem Innenraum 48 zugewandten Seite 94 flach ausgebildet. Die im montierten Zustand dem Innenraum 48 zugewandte Seite 94 des Schenkels 36 des Dichtungselements 16 ist relativ zu einer Vertikalen 114 nach innen abknickend angewinkelt. Der Schenkel 36 weist auf der im montierten Zustand dem Innenraum 48 zugewandten Seite 94 im unverpressten Zustand eine Länge 96 von etwa 4 mm auf. Der Schenkel 36 weist auf einer im montierten Zustand von dem Innenraum 48 abgewandten Seite 98 eine stark abgerundete Kante auf. Eine Länge 100 der von dem Innenraum 48 abgewandten Seite 98 des Schenkels 36 bis zu einem Beginn der Abrundung ist wesentlich kürzer als 4 mm.

Der L-förmige Querschnitt 26 des Dichtungselements 16 umfasst einen weiteren Schenkel 62. Der weitere Schenkel 62 ist dazu vorgesehen, in den Kanal 92 einzugreifen. Das Dichtungselement 16 ist dazu vorgesehen, mittels des weiteren Schenkels 62 die definierte Verpressung zu erzeugen. Der weitere Schenkel 62 und der Schenkel 36 spannen einen Winkel von etwa 80° auf. Der weitere Schenkel 62 verbreitert sich von einem Fuß 108 des weiteren Schenkels 62 zu einem Ende 102 des weiteren Schenkels 62 hin. Dabei ist das (verbreiterte) Ende 102 des weiteren Schenkels 62 im montierten Zustand dem Innenraum 48 zugewandt. Der weitere Schenkel 36 des Dichtungselements 16 ist auf beiden den jeweiligen Flanschen 10, 20 zugewandten Seiten 104, 106 flach ausgebildet. Die beiden den jeweiligen Flanschen 10, 20 zugewandten und voneinander abgewandten Seiten 104, 106 spannen im unverpressten Zustand miteinander einen Winkel von etwa 30° auf. Eine Länge 110 des weiteren Schenkels 62 von dem Ende 102 bis zu dem Fuß 108 beträgt etwa 3,6 mm.

### Bezugszeichen

| | | | |
|---|---|---|---|
| 10 | Flansch | 66 | Montageausnehmung |
| 12 | Grundkörper | 68 | Lasche |
| 14 | Hauptanlagefläche | 70 | Radialrichtung |
| 16 | Dichtungselement | 72 | Teilinnenraum |
| 18 | Ausnehmung | 74 | Teilinnenraum |
| 20 | Weiterer Flansch | 76 | Tiefe |
| 22 | Grundkörper | 78 | Breite |
| 24 | Hauptanlagefläche | 80 | Seitenwand |
| 26 | L-förmiger Querschnitt | 82 | Oberfläche |
| 28 | Fortsatz | 84 | Höhe |
| 30 | Nut | 86 | Seitenwand |
| 32 | Nutbreite | 88 | Konkaver Aufnahmeraum |
| 34 | Öffnung | 90 | Breite |
| 36 | Schenkel | 92 | Kanal |
| 38 | Flanke | 94 | Seite |
| 40 | Erstreckung | 96 | Länge |
| 42 | Erstreckung | 98 | Seite |
| 44 | Boden | 100 | Länge |
| 46 | Mittelachse | 102 | Ende |
| 48 | Innenraum | 104 | Seite |
| 50 | Innenfläche | 106 | Seite |
| 52 | Innenfläche | 108 | Fuß |
| 54 | Innenfläche | 110 | Länge |
| 56 | Innendurchmesser | 112 | Flanschverbindungsvorrichtung |
| 58 | Seitenwand | 114 | Vertikale |
| 60 | Innendurchmesser | | |
| 62 | Weiterer Schenkel | | |
| 64 | Montageausnehmung | | |

## Patentansprüche

1. Vorrichtung zu einer Aufnahme und/oder Leitung von Schüttgütern und/oder Pulvern, mit einer Flanschverbindungsvorrichtung (112) mit einem Flansch (10), der einen Grundkörper (12) mit einer Hauptanlagefläche (14) aufweist, mit einem weiteren Flansch (20), der einen weiteren Grundkörper (22) mit einer weiteren Hauptanlagefläche (24) aufweist, wobei der Flansch (10) in einem montierten Zustand mit dem weiteren Flansch (20) verbunden ist, und mit einem Dichtungselement (16), das in dem montierten Zustand zwischen dem Flansch (10) und dem weiteren Flansch (20) angeordnet ist, wobei der Flansch (10) angrenzend an die Hauptanlagefläche (14) eine Ausnehmung (18) aufweist, in der das Dichtungselement (16) in dem montierten Zustand zumindest teilweise angeordnet ist, und dass der weitere Flansch (20) einen an der weiteren Hauptanlagefläche (24) aus dem weiteren Grundkörper (22) herausragenden Fortsatz (28) aufweist, der in dem montierten Zustand zumindest teilweise und/oder zumindest abschnittweise in die Ausnehmung (18) eingreift und in dem montierten Zustand das Dichtungselement (16) kontaktiert, wobei der Fortsatz (28) zu einer Positionierung und Zentrierung des Dichtungselements (16) und/oder zu einer definierten Verpressung des Dichtungselements (16) vorgesehen ist, wobei der Flansch (10) und der weitere Flansch (20) gemeinsam eine Nut (30) begrenzen, die einen Teil der Ausnehmung (18) ausbildet und die dazu vorgesehen ist, das Dichtungselement (16) teilweise aufzunehmen und wobei sich eine Nutbreite (32) der Nut (30) ausgehend von einer Öffnung (34) der Nut (30) hin zu einem Tiefpunkt der Nut (30) zumindest bereichsweise vergrößert, wobei die Ausnehmung (18) als eine zwischen der Hauptanlagefläche (14) des Flanschs (10) und einer Innenfläche (52) des Flanschs (10) liegende und in eine von dem weiteren Flansch (20) wegweisende Richtung erstreckte Abstufung ausgebildet ist, wobei der Fortsatz (28) eine erste Seitenwand (80) aufweist, wobei die erste Seitenwand (80) des Fortsatzes (28) von einem Teilinnenraum (74) des weiteren Flanschs (20) abgewandt angeordnet ist, wobei die erste Seitenwand (80) des Fortsatzes (28) an die weitere Hauptanlagefläche (24) anschließt, wobei der Fortsatz (28) eine zweite Seitenwand (86) aufweist, wobei die zweite Seitenwand (86) des Fortsatzes (28) zu dem Teilinnenraum (74) des weiteren Flanschs (20) zugewandt angeordnet ist, **dadurch gekennzeichnet, dass** die erste Seitenwand (80) des Fortsatzes (28) relativ zu einer Axialrichtung von Innenöffnungen der Flansche (10, 20) angewinkelt ist.

2. Vorrichtung nach Anspruch 1, **dadurch gekennzeichnet, dass** das Dichtungselement (16) einen Schenkel (36) umfasst, der dazu vorgesehen ist, formschlüssig in die Nut (30) einzugreifen, wobei das Dichtungselement (16) dazu vorgesehen ist, mittels des Schenkels (36) selbsthaltend in der Nut (30) angeordnet zu werden.

3. Vorrichtung nach einem der vorhergehenden Ansprüche, **dadurch gekennzeichnet, dass** der Flansch (10), das Dichtungselement (16) und der weitere Flansch (20) in dem montierten Zustand einen gleichen minimalen Abstand zu einer gemeinsamen Mittelachse (46) aufweisen.

4. Vorrichtung nach einem der vorhergehenden Ansprüche, **gekennzeichnet durch** einen Innenraum (48), der als eine Leitung für ein Schüttgut und/oder Pulver vorgesehen ist, wobei der Flansch (10), das Dichtungselement (16) und der weitere Flansch (20) in dem montierten Zustand gegenüber dem Innenraum (48) totraumfrei miteinander verbunden sind.

5. Vorrichtung nach einem der vorhergehenden Ansprüche, **dadurch gekennzeichnet, dass** eine Innenfläche (50) des Dichtungselements (16) in dem montierten Zustand bündig zu einer, insbesondere zylindrischen, Innenfläche (52) des Flanschs (10) und zu einer weiteren, insbesondere zylindrischen, Innenfläche (54) des weiteren Flanschs (20) angeordnet ist.

6. Vorrichtung nach einem der vorhergehenden Ansprüche, **dadurch gekennzeichnet, dass** sich die Hauptanlagefläche (14) und die weitere Hauptanlagefläche (24) in dem montierten Zustand kontaktieren.

7. Vorrichtung nach einem der vorhergehenden Ansprüche, **dadurch gekennzeichnet, dass** der Flansch (10) einen Innendurchmesser (60) aufweist, der mindestens DN 200 entspricht.

## Claims

1. A device for receiving and/or conducting bulk materials and/or powders, having a flange connection device (112) with a flange (10) comprising a base body (12) with a main contact face (14), with a further flange (20) comprising a further base body (22) with a further main contact face (24), wherein in a mounted state the flange (10) is connected to the further flange (20), and with a sealing element (16) which in the mounted state is arranged between the flange (10) and the further flange (20), wherein the flange (10) has a recess (18) which adjoins the main contact face (14) and in which the sealing element (16) is at least partially arranged in the mounted state, and wherein the further flange (20) has an extension (28) which protrudes from the further base body (22) at the further main contact face (24) and in the mounted state engages at least partially and/or at least section-wise in the recess (18) and in the mounted state contacts the sealing element (16), wherein the extension (28) is configured for positioning and centering the sealing element (16) and/or for defined compression of the sealing element (16), wherein the flange (10) and the further flange (20) jointly delimit a groove (30) which forms part of the recess (18) and is configured to partially receive the sealing element (16), and wherein a groove width (32) of the groove (30) increases at least region-wise starting from an opening (34) of the groove (30) toward a deepest point of the groove (30), wherein the recess (18) is formed as a shoulder lying between the main contact face (14) of the flange (10) and an inner face (52) of the flange (10) and extending in a direction pointing away from the further flange (20), wherein the extension (28) has a first side wall (80), wherein the first side wall (80) of the extension (28) is arranged facing away from a partial interior space (74) of the further flange (20), wherein the first side wall (80) of the extension (28) adjoins the further main contact face (24), wherein the extension (28) has a second side wall (86), wherein the second side wall (86) of the extension (28) is arranged facing the partial interior space (74) of the further flange (20), **characterized in that** the first side wall (80) of the extension (28) is angled relative to an axial direction of inner openings of the flanges (10, 20).

2. The device according to claim 1, **characterized in that** the sealing element (16) has a leg (36) which is configured to engage by form-fit in the groove (30), wherein the sealing element (16) is configured to be arranged self-retainingly in the groove (30) by means of the leg (36).

3. The device according to any one of the preceding claims, **characterized in that** the flange (10), the sealing element (16) and the further flange (20) in the mounted state have a same minimal distance from a common center axis (46).

4. The device according to any one of the preceding claims, **characterized by** an interior space (48) which is configured as a conduit for a bulk material and/or powder, wherein the flange (10), the sealing element (16) and the further flange (20) in the mounted state are connected to one another with no dead space against the interior space (48).

5. The device according to any one of the preceding claims, **characterized in that** an inner face (50) of the sealing element (16) in the mounted state is arranged flush with an, in particular cylindrical, inner face (52) of the flange (10) and with a further, in particular cylindrical, inner face (54) of the further flange (20).

6. The device according to any one of the preceding claims, **characterized in that** the main contact face (14) and the further main contact face (24) contact one another in the mounted state.

7. The device according to any one of the preceding claims, **characterized in that** the flange (10) has an inner diameter (60) which corresponds to at least DN 200.

## Revendications

1. Dispositif pour la réception et/ou la conduite de produits en vrac et/ou de poudres, comprenant un dispositif de liaison à bride (112) avec une bride (10), qui présente un corps de base (12) avec une surface d'appui principale (14), avec une autre bride (20), qui présente un autre corps de base (22) avec une autre surface d'appui principale (24), la bride (10) étant reliée dans un état monté à l'autre bride (20), et avec un élément d'étanchéité (16), qui est disposé dans l'état monté entre la bride (10) et l'autre bride (20), la bride (10) présentant, de manière adjacente à la surface d'appui principale (14), un évidement (18), dans lequel l'élément d'étanchéité (16) est disposé au moins en partie dans l'état monté, et l'autre bride (20) présentant un prolongement (28) dépassant de l'autre corps de base (22) au niveau de l'autre surface d'appui principale (24), qui s'engage dans l'état monté au moins en partie et/ou au moins par sections dans l'évidement (18) et vient en contact dans l'état monté avec l'élément d'étanchéité (16), le prolongement (28) étant prévu pour un positionnement et un centrage de l'élément d'étanchéité (16) et/ou pour une compression définie de l'élément d'étanchéité (16), la bride (10) et l'autre bride (20) délimitant ensemble une rainure (30), qui forme une partie de l'évidement (18) et qui est prévue pour recevoir en partie l'élément d'étanchéité (16), et une largeur de rainure (32) de la rainure (30) augmentant au moins par sections à partir d'une ouverture (34) de la rainure (30) vers un point le plus profond de la rainure (30), l'évidement (18) étant réalisé sous forme d'épaulement situé entre la surface d'appui principale (14) de la bride (10) et une surface intérieure (52) de la bride (10) et s'étendant dans une direction s'éloignant de l'autre bride (20), le prolongement (28) présentant une première paroi latérale (80), la première paroi latérale (80) du prolongement (28) étant disposée à l'opposé d'un espace intérieur partiel (74) de l'autre bride (20), la première paroi latérale (80) du prolongement (28) se raccordant à l'autre surface d'appui principale (24), le prolongement (28) présentant une deuxième paroi latérale (86), la deuxième paroi latérale (86) du prolongement (28) étant disposée de manière tournée vers l'espace intérieur partiel (74) de l'autre bride (20), **caractérisé en ce que** la première paroi latérale (80) du prolongement (28) est inclinée par rapport à une direction axiale des ouvertures intérieures des brides (10, 20).

2. Dispositif selon la revendication 1, **caractérisé en ce que** l'élément d'étanchéité (16) comprend une branche (36), qui est prévue pour s'engager par complémentarité de forme dans la rainure (30), l'élément d'étanchéité (16) étant prévu pour être disposé de manière autobloquante dans la rainure (30) au moyen de la branche (36).

3. Dispositif selon l'une quelconque des revendications précédentes, **caractérisé en ce que** la bride (10), l'élément d'étanchéité (16) et l'autre bride (20) présentent dans l'état monté une distance minimale identique par rapport à un axe médian commun (46).

4. Dispositif selon l'une quelconque des revendications précédentes, **caractérisé par** un espace intérieur (48), qui est prévu sous forme de conduite pour un produit en vrac et/ou une poudre, la bride (10), l'élément d'étanchéité (16) et l'autre bride (20) étant reliés l'un à l'autre dans l'état monté par rapport à l'espace intérieur (48) sans espace mort.

5. Dispositif selon l'une quelconque des revendications précédentes, **caractérisé en ce qu'**une surface intérieure (50) de l'élément d'étanchéité (16) est disposée dans l'état monté à fleur d'une surface intérieure (52), en particulier cylindrique, de la bride (10) et d'une autre surface intérieure (54), en particulier cylindrique, de l'autre bride (20).

6. Dispositif selon l'une quelconque des revendications précédentes, **caractérisé en ce que** la surface d'appui principale (14) et l'autre surface d'appui principale (24) viennent en contact dans l'état monté.

7. Dispositif selon l'une quelconque des revendications précédentes, **caractérisé en ce que** la bride (10) présente un diamètre intérieur (60), qui correspond au moins à DN 200.
